(19) Europäisches Patentamt
European Patent Office
Office européen des brevets

(11) Publication number: 0 039 488 B1

(12) EUROPEAN PATENT SPECIFICATION

(45) Date of publication of patent specification: 04.07.84

(21) Application number: 81103282.0

(22) Date of filing: 30.04.81

(51) Int. Cl.[3]: C 23 F 11/08, C 23 F 11/10, C 08 L 71/02, C 10 M 3/22

# (54) Composition containing a water-soluble polyalkyleneoxide, a stabiliser therefor and a corrosion inhibitor.

(30) Priority: 02.05.80 US 146326

(43) Date of publication of application: 11.11.81 Bulletin 81/45

(45) Publication of the grant of the patent: 04.07.84 Bulletin 84/27

(84) Designated Contracting States: AT BE DE FR GB IT SE

(56) References cited:
FR - A - 1 185 008
FR - A - 2 071 843
GB - A - 1 004 259
GB - A - 1 098 734
US - A - 3 629 111
US - A - 3 779 927
US - A - 4 014 814

The file contains technical information submitted after the application was filed and not included in this specification

(73) Proprietor: UNION CARBIDE CORPORATION
Old Ridgebury Road
Danbury Connecticut 06817 (US)

(72) Inventor: Mago, Blake Franklin
P.O. Box 182
Pocono Pines Pennsylvania 18350 (US)
Inventor: Barr, Kenneth James
92 Frederic Street
Yonkers 10703 (US)
Inventor: McCullough, Groome
176 Amsterdam Avenue
Howthorne New York 10532 (US)

(74) Representative: Wuesthoff, Franz, Dr.-Ing. et al,
Patentanwälte Wuesthoff -v. Pechmann-Behrens-Goetz Schweigerstrasse 2
D-8000 München 90 (DE)

(56) References cited:
CHEMICAL ABSTRACTS, vol. 82, 1975, page 146, abstract 100283f Columbus, Ohio, US

CHEMICAL ABSTRACTS, vol. 87, page 31, 1977, abstract 168825t Columbus, Ohio, US

CHEMICAL ABSTRACTS, vol. 91, no. 22, November 1979, page 291 abstract 179971w Columbus, Ohio, US

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 039 488 B1

**Description**

This invention relates to improved poly(alkylene oxide) compositions, and more particularly to poly(alkylene oxide) compositions and aqueous solutions thereof that exhibit excellent resistance to oxidation and that inhibit corrosion of ferrous metals with which they come in contact.

Poly(alkylene oxide) polymers have many and diverse industrial applications, providing not only compatibility with water, but good lubricating qualities and stability as well. Thus, these materials have found wide use both as substantially 100 percent active compositions and as aqueous solutions in applications such as hydraulic fluids, metal working lubricants, metal treating formulations, and the like. As with all materials that may contain some water, these must protect metals with which they come into contact, and ferrous metals are of particular interest. Corrosion-inhibitive additives are therefore commonly included in the poly(alkylene oxide) containing compositions for this purpose, and success or failure in a particular application may well depend upon the quality of protection for metals realized in service.

A potential hindrance to the protection accorded is that, like most organic polymers, poly(alkylene oxides) are oxidized by oxygen at elevated temperatures. Even in an aqueous medium, oxidation of the polymer can have a significant effect on the lubricating quality of the fluid. Moreover, the products of oxidation are usually acids that foster corrosion of most metals, and further limit the useful life of the polymer-containing compositions.

Heretofore, alkali metal nitrites such as sodium nitrite have been widely used as additives for poly(alkylene oxide) solutions to inhibit corrosion of metals, their powerful passivating effect on ferrous metals being known. Recently, however, the carcinogenic properties of N-nitrosamines, which are the reaction products of secondary amines with nitrites, have caused serious concern about whe advisability of using nitrites, and the replacement of nitrites with additives that do not present a health hazard, yet are effective in corrosion inhibition, is of considerable interest.

However, it has been found that nitrite ions are very efficient in preventing the oxidation of higher poly(alkylene oxide) polymers in hot aqueous solutions, in addition to inhibiting corrosion, and, therefore, a suitable replacement for the alkali metal nitrites in poly(alkylene oxide)-containing compositions must impart resistance to oxidation as well as protection against corrosion. While there are many additives known in the art which inhibit the corrosion of metals or improve the oxidation resistance of organic polymers, none of these materials has been shown to achieve both effects in an aqueous polymer solution.

From US—PS 30 95 394, it is known to stabilise polyoxyalkylene with respect to oxidative degradation with the aid of 1,1-diphenyl-2-picrylhydrazine or its free radical. On the other hand, the most diverse corrosion inhibitors are known for surface treatment of ferrous materials. For example, according to Chem. Abstr., Vol. 82, 1965, ref. 100283f, resorcinic acid and 5,5′-methylenebissalicylic acid or its derivatives are used in the form of an aqueous or alcoholic solution in order to avoid disturbance during welding by a superficial oxide film. According to US—PS 23 98 202, a compound is used as corrosion inhibitor which is a dicarboxylic acid whose carboxylic acid groups are linked via long alkylene groups to sulphur, selenium or tellurium. These corrosion inhibitors, should not contain strong polar groupings such as the hydroxyl group. According to FR—PS 11 85 008, an organic mercaptan in aqueous or alcoholic solution in the presence of an oxidant in the form of an organic acid substituted by nitrogroups and/or a mineral acid, optionally in the presence of a base, of borates, phosphates, tungstates or molybdates is used as corrosion inhibitor. The above prior art thus deals with either the stabilisation of polyoxyalkylenes with respect to oxidative degradation or with corrosion inhibitor substances in aqueous or alcoholic solution for ferrous materials or similar, without these solutions containing larger amounts of polymers, in particular polyoxyalkylenes. In all these publications, the simultaneous stabilisation of a polyoxyalkylene with respect to oxidative degradation and the prevention of corrosive attack by fluids containing polyoxyalkylenes on metallic materials is not dealt with.

In copending application (EP—A1—0022701 of B. Mago, filed June 29, 1979), there are disclosed poly(alkylene oxide) compositions containing small amounts of a bridged dimer of a hydroxyl-substituted aromatic carboxylic acid, and in copending application (EP—A1—0026709 of B. Mago, filed September 26, 1979) there are disclosed poly(alkylene oxide) compositions containing small amounts of a mononuclear aromatic compound having at least one substituent nitro group, both of which compositions exhibit excellent resistance to oxidative degradation and inhibit the corrosion of ferrous metals. The effective concentration of the inhibitor additives disclosed is, however, somewhat greater than that of the alkali metal nitrites, and it would be desirable to provide suitable protection with a lesser amount of additive; or even further improvements in corrosion inhibition may be desirable for certain applications.

Summary of the Invention

In accordance with the present invention there are provided poly(alkylene oxide) compositions which exhibit resistance to oxidative degradation and inhibit the corrosion of ferrous metals, having incorporated therein a small effective inhibiting amount of a mixture comprising at mononuclear compound having at least one substituent nitro group and a precipitant anodic inhibitor. Preferably, said

compositions comprise a buffer having a pH between 8 and 10.

There are also provided in accordance with the present invention aqueous poly(alkylene oxide) compositions comprising a small effective inhibiting amount of a mixture comprising a mononuclear aromatic compound having at least one substituted nitro group and a precipitant anodic inhibitor. Preferably, a buffer having a pH between 8 and 10 is also included in said compositions.

Also provided is a method for preparing poly(alkylene oxide) compositions which exhibit resistance to oxidative degradation and inhibit the corrosion of ferrous metals which comprises incorporating in a poly(alkylene oxide) composition a mononuclear aromatic compound having at least one substituent nitro group and a precipitant anodic inhibitor.

It has been found that the particular combinations of additive components herein disclosed is efficient in inhibiting the oxidation of poly(alkylene oxide) polymer compositions, including aqueous solutions thereof, and is significantly more effective in inhibiting the corrosion of ferrous metals contacted by such compositions than either of said components are when used alone, while not presenting any known health hazards of toxicological problems.

Description of the Invention

Poly(alkylene oxide) polymers suitable for use in the compositions of the invention are known compounds, and even though of high molecular weight, are water-soluble. In general, these polymers will contain oxyethylene groups or both oxyethylene groups and higher oxyalkylene groups such as oxybutylene and oxypropylene groups in their molecules, and will have average molecular weights from 400 to 40,000. The proportion of oxyethylene groups in the molecule is such that the poly(alkylene oxide) polymers are soluble in water at ordinary temperatures, and the proportion of oxypropylene or higher oxyalkylene group is such that the poly(alkylene oxide) remains liquid at ordinary temperatures up to a molecular weight of 40,000 and higher, or melts at temperatures below about 60°C. The oxypropylene/oxyethylene molar ratio may vary from zero to about unity. These poly(alkylene oxide) polymers may be made by processes well known in the art by reacting ethylene oxide or mixtures of ethylene oxide and propylene oxide or higher alkylene oxide with a compound having from one up to as many as six active hydrogen atoms, such as water, monohydroxylic alcohols such as ethanol and propanol, dihydroxylic alcohols such as ethylene glycol, trihydroxylic alcohols such as glycerine and trimethylolpropane, tetrahydroxylic alcohols such as pentaerythritol, hexahydroxylic alcohols such as sorbitol, and mono- or poly-functional amines such as butylamine and ethylene diamine. The poly(alkylene oxide) products of such reactions will have linear or branched oxyethylene or oxyethylene-higher oxyalkylene chains, and such chains will terminate with hydroxyl groups. Some or all of these hydroxyl groups may be etherified by reaction with a dialkyl sulfate such as diethyl sulfate.

As hereinabove stated, the poly(alkylene oxide) polymers of the inventive composition can be used in their substantially 100 percent active form or as aqueous solutions thereof. The proportion of poly(alkylene oxide) polymers in such aqueous solutions depends upon the particular application for which they are intended and can be varied within a wide range to obtain the desired results. In general, the aqueous solution contains any amount of polymer from 0.1 percent by weight to 50 percent by weight.

An essential component of the compositions of the invention is a mononuclear aromatic compound having at least one substituent nitro group. Suitable nitroaromatic compounds are the nitrosubstituted aromatic acids and compounds such as nitroaromatic salts and esters, that, in situ, effect the formation of the acid anion. Exemplary suitable nitroaromatic compounds are 3-nitrobenzoic acid, 4-nitrophthalic acid, 4-nitroisophthalic acid, 3,5-dinitrobenzoic acid and p-nitrocinnamic acid and alkali metal or ammonium salts thereof.

Another essential component of the compositions of the invention is a precipitant anodic inhibitor.

Suitable precipitant anodic inhibitors include the anion of a fatty acid, which may be saturated or unsaturated, having up to 24 or more carbon atoms. Illustrative of such fatty acids are hexanoic, octanoic, capric, decanoic, lauric, myristic, palmitic, nonanoic, palmitic, stearic, oleic, linoleic and linolenic acids which may either have straight or branched carbon chains. Products in which mixtures of acids of the foregoing kind occur, such as tall oil acid, may also be used.

Also suitable are bridged dimers of a hydroxyl-substituted aromatic carboxylic acid and salts thereof of the general formula:

1)

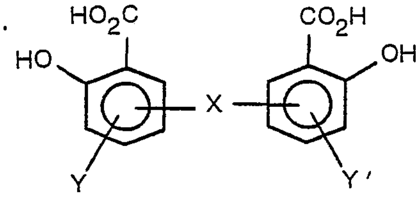

or

2) 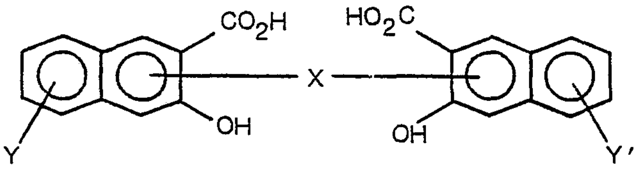

wherein X is a chemically stable group selected from lower alkylene, sulfonyl, and amino groups, and a sulfur atom, and Y and Y′ may be the same or different and are a hydrogen atom, hydroxyl group, amino group, or alkyl group.

Also suitable are non-oxidizing inorganic acids such as tungstic, molybdic, and phosphoric acids. Other suitable precipitant anodic inhibitors are boric acid and benzoic acid.

As a general rule, the additive components hereinabove described are used in a combined amount sufficient to impart the desired degree of corrosion inhibition and oxidation resistance to the composition, depending upon the severity of operating conditions and service requirements for the particular application. The amount used may vary somewhat depending on such factors and can be readily determined by routine experimentation. The maximum amount of each of the additive components and the combinations thereof that should be present is not critical, with economic factors generally determining the use of amounts greatly in excess of that actually required. The combined amount of additive components that should be present will be called herein an "effective amount", which is defined as being above the minimum required to achieve the oxidation resistance and corrosion protection required for a particular application. In general, however, an amount of each of the additive components of about 5 to 10 millimoles of compound per liter of polymer solution, or even less, will be a minimum "effective amount" of the combination of additives.

In accordance with the present invention, preferred embodiments of the compositions of the invention may also have incorporated therein a class of buffers having a pH between 8 and 10. Exemplary suitable buffers are amine buffers such as alkanolamines and borax.

Poly(alkylene oxide) compositions and aqueous solutions thereof which exhibit resistance to oxidative degradation inhibit the corrosion of ferrous metals, such as the poly(alkylene oxide) compositions of the invention, may be prepared by incorporating the additive components herein described in a poly(alkylene oxide) polymer by admixing said additive components with the poly(alkylene oxide) using any known method until a solution or uniform dispersion thereof is formed. Preferably, the additive components employed will be soluble in the poly(alkylene oxide) and in aqueous solutions thereof. The order of addition of said additive components is not critical.

Studies of corrosion inhibition of aqueous solutions of poly(alkylene oxide) of this invention, as well as the controls which demonstrate the prior art, involved immersion tests of panels of steel for eight days in a 10% polymer solution at 70°C while sparging lightly with air, and then measuring weight loss and noting the appearance of the metal and of the solutions. The corrosion inhibiting ability of the various polymer solutions was determined for solutions prepared with distilled water to which, typically, 500 ppm each of sodium chloride, sodium sulfate, and sodium formate were added to simulate typical impurities. The samples used in this study were weighed, cold-rolled 101.101.1,6 mm (4 inch x 4 inch x 1/6 inch) mild steel plates which had been polished and scrubbed with a wet bristle brush and commercial kitchen powder cleaner, rinsed, and dried. The degree of corrosion was determined from the weight change of the steel panel sample after cleaning, with weight loss being recorded in units of mm per year (mils per year, mpy).

The invention will become more clear when considered together with the following examples, which are set forth as being merely illustrative of the invention and which are not intended, in any manner, to be limitative thereof. Unless otherwise indicated, all parts and percentages are by weight.

Example 1

The apparatus and procedures outlined above were used to evaluate the corrosion inhibition of steel for 10% aqueous solutions of varous poly(alkylene oxide) compositions. In the immersion corrosion tests, the poly(alkylene oxide) polymer used was a liquid, water-soluble commercial product available under the trademark designation UCON 75-H-90000 from Union Carbide Corporation. This material is a water-soluble copolymer of ethylene oxide and propylene oxide containing approximately 75 percent by weight ethylene oxide and having a nominal viscosity of 90,000 SUS units ((saybolt universal seconds measured at 100°F) or 1,95 $m^2/s$ at 38°C).

In these tests, compositions containing the sodium salt of m-nitrobenzoic acid in various proportions by itself and in combination with benzoic acid (a precipitant anodic inhibitor) and monoethanolamine (a buffer) were compared with compositions prepared without any inhibitor and with compositions containing the sodium salt of benzoic acid or mono-ethanolamine by itself and in combination thereof. The results obtained during the corrosion tests are summarized in Table I.

The data thus presented show that when no inhibitor was used in the aqueous poly(alkylene oxide) composition (Tests 1, 2, and 3), the weight loss of the steel test panels was very high, whereas

the corrosion rate was insignificant with an aqueous poly(alkylene oxide) composition containing a combination of the sodium salt of m-nitrobenzoic acid, monoethanolamine, and benzoic acid (Test 9). Tests 4 and 5, however, show that m-nitrobenzoate ion, when used alone, had a critical concentration between 36 mmol/liter (Test 4) and 72 mmol/liter (Test 5), below which it was ineffecitve and above which the corrosion rate was essentially not measurable (less than 2,5 mm/year (0.1 mil/year)), which critical concentration was much higher than was used effectively in Test 9. Moreover, in Test 6, it was shown that the benzoate ion at high concentration and pH only partly inhibits the corrosion rate, and in Tests 7 and 8, monoethanolamine by itself and in combination with benzoic acid only partially reduces the corrosion rate.

TABLE I

| Test | Additive | Additive Concentration mmol/liter | pH After-test | Corrosion Rate mm per year | (mils per year) |
|---|---|---|---|---|---|
| 1 | None | — | 6.3 | 305 | (12) |
| 2 | None | — | 4.0 | 381 | (15) |
| 3 | None | — | 4.3 | 838 | (33) |
| 4 | Sodium salt of m-nitro-benzoic acid. | 36 | 9.6 | 889 | (35) |
| 5 | " | 72 | 6.4 | 2,3 | (0.09) |
| 6 | Sodium salt of benzoic acid. | 69 | 8.7 | 22,9 | (0.9) |
| 7 | Monoethanol-amine. | 100 | 10.8 | 63,5 | (2.5) |
| 8 | Monoethanol-amine.<br>Benzoic acid | 100<br>50 | 9.3 | 40.6 | (1.6) |
| 9 | Monoethanol-amine.<br>Benzoic acid.<br>Sodium salt of m-nitrobenzoic acid. | 100<br>50<br>10.6 | 9.2 | 1,02 | (0.04) |

Example 2

The procedure described in Example 1 was used in the study of the inhibition of the corrosion of steel for 10% aqueous solutions of poly(alkylene oxide) compositions with the addition of embonic acid and m-nitrobenzoic acid. The type and proportions of additives employed in the compositions of this Example and the corrosion inhibition results are summarized in Table II. The poly(alkylene oxide) was the same polymer employed in the compositions of Example 1.

The data thus presented show in Tests 1—3 the high weight loss of steel test panels resulting from aqueous poly(alkylene oxide) compositions where no inhibitor was used, and in Tests 4 and 5 that the corrosion rate was reduced to a negligible value by the m-nitrobenzoate ion alone when it is used at a concentration above a critical value in the range 36 to 72 mmol/liter. Tests 6 and 7 show that the pentasodium salt of diethylenetriaminepenta (methylene-phosphonic acid), a buffer available commercially under the trademark designation Wayplex 55-FA from Philip A. Hunt Corp., used in combination with the sodium salt of m-nitrobenzoic acid resulted in a corrosion rate so high, as determined by visual observation, that the tests were terminated after one day without determining the weight losses. Further, Tests 8 and 9 show that disodium embonate alone was a partial corrosion inhibitor, although the combination thereof with the buffer Wayplex 55-FA (Tests 10 and 11), appears to promote corrosion. In Tests 12 and 13, it was shown that the combination of disodium embonate and sodium m-nitrobenzoate, used at concentrations at which neither material was effective in

inhibiting corrosion by itself, together reduced the rate of corrosion to a negligible value, even when employed in combination with Wayplex 55-FA.

TABLE II

| Test | Additive | Additive Concentration mmol/liter | pH After-test | Corrosion Rate mm per year | (mils per year) |
|---|---|---|---|---|---|
| 1 | None | — | 6.3 | 305 | (12) |
| 2 | None | — | 4.0 | 381 | (15) |
| 3 | None | — | 4.3 | 838 | (33) |
| 4 | Sodium salt of m-nitro-benzoic acid. | 36 | 9.6 | 889 | (35) |
| 5 | Sodium salt of m-nitro-benzoic acid. | 72 | 6.4 | 2,3 | (0.09) |
| 6 | Sodium salt of m-nitrobenzoic acid.<br>Wayplex 55-FA. | 10.6<br>2.9 | — | High | |
| 7 | Sodim salt of m-nitrobenzoic acid.<br>Wayplex 55-FA | 10.6<br>2.9 | — | High | |
| 8 | Disodium salt of embonic acid. | 4.6 | 8.1 | 114,3 | (4.5) |
| 9 | Disodium salt of embonic acid. | 9.2 | 9.0 | 118 | (7.4) |
| 10 | Disodium salt of embonic acid.<br>Wayplex 55-FA | 4.6<br>2.9 | — | 939,8 | (37) |
| 11 | Disodium salt of embonic acid.<br>Wayplex 55-FA | 4.6<br>2.9 | — | 889 | (35) |
| 12 | Sodium salt of m-nitrobenzoic acid.<br>Disodium salt of embonic acid<br>Wayplex 55-FA | 10.6<br>4.6<br>2.9 | — | 1,02 | (0.04) |
| 13 | Sodium salt of m-nitrobenzoic acid.<br>Disodium salt of embonic acid<br>Wayplex 55-FA | 10.6<br>4.6<br>2.9 | — | 1,02 | (0.04) |

Example 3

The procedure described in Example 1 was used in the study of the inhibition of the corrosion of steel for 10% aqueous solutions of poly(alkylene oxide) compositions with various concentrations of sodium m-nitrobenzoate by itself and in combination with a buffer (Wayplex 55-FA) and precipitant

anodic inhibitor (disodium methylenedisalicylate). The poly(alkylene oxide) was the same polymer employed in the compositions of Example 1, and the Wayplex 55-FA was the same buffer used in Example 2.

In these tests, compositions containing the nitrobenzoate additive were compared with compositions prepared without any inhibitor and with compositions containing the other additives by themselves or in combination. The compositions employed and results obtained are summarized in Table III.

The data presented in Tests 1 to 7 are the same as Tests 1 to 7 in Example 2 and show the high weight loss of steel test panels resulting from aqueous poly(alkylene oxide) compositions where no corrosion inhibitor was used (Test 1 to 3), that m-nitrobenzoate by itself was an effective corrosion inhibitor when used at a concentration above a critical value in the range 36 to 72 mmol/liter (Tests 4 and 5), and that the combination of the buffer, Wayplex 55-FA, and m-nitrobenzoate resulted in an extremely high corrosion rate (Tests 6 and 7). In tests 8 and 9 hereof, the data presented show that compositions containing the combination of the disodium salt of methylene disalicylic acid and Wayplex 55-FA exhibited a very high corrosion rate, and the tests were terminated without measuring the weight losses. Tests 10 and 11, however, show that compositions containing the combination of the disodium salt of methylenedisalicyclic acid and the sodium salt of m-nitrobenzoic acid, at concentrations at which neither additive was an effective corrosion inhibitor alone, exhibited essentially negligible corrosion.

TABLE III

| Test | Additive | Additive Concentration mmol/liter | pH After-test | Corrosion Rate mm per year | (mils per year) |
|---|---|---|---|---|---|
| 1 | None | — | 6.3 | 305 | (12) |
| 2 | None | — | 4.0 | 381 | (15) |
| 3 | None | — | 4.3 | 838 | (33) |
| 4 | Sodium salt of m-nitro-benzoic acid. | 36 | 9.6 | 889 | (35) |
| 5 | Sodium salt of m-nitro-benzoic acid. | 72 | 6.4 | 2,3 | (0.09) |
| 6 | Sodium salt of m-nitrobenzoic acid. | 10.6 | — | High | |
| | Wayplex 55-FA | 2.9 | | | |
| 7 | Sodium salt of m-nitrobenzoic acid. | 10.6 | — | High | |
| | Wayplex 55-FA | 2.9 | | | |
| 8 | Disodium salt of methylenedi-salicylic acid. | 6.0 | — | High | |
| | Wayplex 55-FA. | 2.9 | | | |
| 9 | Disodium salt of methylenedi-salicylic acid. | 6.0 | — | High | |
| | Wayplex 55-FA | 2.9 | | | |
| 10 | Disodium salt of methylenedi-salicylic acid. | 6.0 | — | 1,02 | (0.04) |
| | Sodium salt of m-nitrobenzoic acid. | 10.6 | | | |
| | Wayplex 55-FA | 2.9 | | | |
| 11 | Disodium salt of methylenedi-salicylic acid. | 6.0 | — | 1,02 | (0.04) |
| | Sodium salt of m-nitrobenzoic acid. | 10.6 | | | |
| | Wayplex 55-FA | 2.9 | | | |

Example 4

The procedure generally described in Example 1 was used in the study of the inhibition of the corrosion of steel for 10% aqueous solutions of poly(alkylene oxide) to each of which were added a buffer, consisting of 100 millimoles per liter of monoethanolamine half-neutralized with 50 millimoles per liter of acetic acid, and various proportions of other additives, as shown in Table IV. The poly(alkylene oxide) polymer of Example 1 was used in the compositions of this example.

In these tests, buffered poly(alkylene oxide) compositions containing no additional additive were compared with compositions in which other additives and combinations of additives were used, and the results obtained during the corrosion tests are summarized in Table IV.

The data thus presented show that poly(alkylene oxide) compositions containing a partially neutralized monoethanolamine buffer (Tests 1—3) exhibit a high corrosion rate of steel panels, and Tests 4 and 5 show that 3,5-dinitrobenzoate in the buffered poly(alkylene oxide) compositions up to a concentration of at least 10 mmol/liter was ineffective in inhibiting corrosion. In Tests 6 and 8, it is shown that methylenedisalicylic acid and pamoic acid were partial inhibitors for corrosion by the buffered poly(alkylene oxide) compositions, but the combination of 3,5-dinitrobenzoic acid with methylenedisalicylc acid (Test 7) or with pamoic acid (Test 9) inhibits corrosion by the buffered poly(alkylene oxide) solutions better than does any component alone.

TABLE IV

| Test | Additive* | Additive Concentration mmol/liter | Corrosion Rate mm per year | (mils per year) |
|---|---|---|---|---|
| 1 | None | — | 317,5 | (12.5) |
| 2 | None | — | 246,4 | (9.7) |
| 3 | None | — | 289,6 | (11.4) |
| 4 | 3,5-dinitro-benzoic acid. | 5 | 289,6 | (11.4) |
| 5 | 3,5-dinitro-benzoic acid. | 10 | 607,1 | (23.9) |
| 6 | Methylenedisali-cylic acid. | 5 | 188 | (7.4) |
| 7 | Methylenedisali-cylic acid.<br>3,5-dinitro-benzoic acid. | 5<br>5 | 91,4 | (3.6) |
| 8 | Embonic acid. | 5 | 195,6 | (7.7) |
| 9 | Embonic acid.<br>3,5-dinitro-benzoic acid. | 5<br>5 | 121,9 | (4.8) |

* All solutions contained 100 m*M* monoethanolamine and 50 m*M* acetic acid.

Example 5

Using the procedure of Example 4, the corrosion rate of 10% solutions of poly(alkylene oxide) compositions buffered with the partially neutralized monoethanolamine of Example 4 were studied. In these tests, compositions containing 3,5-dinitrobenzoic acid by itself and in combination with various inorganic acid salts were compared with compositions prepared without any inhibitor. The compositions employed and results obtained during the corrosion tests are summarized in Table V.

The data show that in Tests 1 to 5, the buffered poly(alkylene oxide) composition without other additives was quite corrosive, and that 3,5-dinitrobenzoic acid in concentrations up to at least 10 mmol/liter did not achieve any inhibition of the corrosion by the poly(alkylene oxide) composition. Tests 6 and 8 show that sodium tungstate and sodium molybdate partially inhibit the corrosion of buffered poly(alkylene oxide) compositions, while Tests 7 and 9 show that combinations of 3,5-dinitrobenzoic acid with sodium tungstate or sodium molybdate effect better corrosion inhibition than either additive alone at the concentrations employed.

TABLE V

| Test | Additive* | Additive Concentration mmol/liter | Corrosion Rate mm per year | (mils per year) |
|---|---|---|---|---|
| 1 | None | — | 317,5 | (12.5) |
| 2 | None | — | 246,4 | (9.7) |
| 3 | None | — | 289,6 | (11.4) |
| 4 | 3,5-dinitro-benzoic acid. | 5 | 289,6 | (11.4) |
| 5 | 3,5-dintiro-benzoic acid. | 10 | 607,1 | (23.9) |
| 6 | Sodium tungstate ($Na_2WO_4$). | 10 | 94 | (3.7) |
| 7 | Sodium tungstate<br>3,5-dinitro-benzoic acid. | 5<br>5 | 25,4 | (1.0) |
| 8 | Sodium molybdate ($Na_2MoO_4$). | 10 | 172,7 | (6.8) |
| 9 | Sodium molybdate<br>3,5-dinitro-benzoic acid. | 5<br>5 | 5,6 | (0.22) |

* All solutions contained 100 m*M* monoethanolamine and 50 m*M* acetic acid.

**Claims**

1. Composition containing a water soluble poly(alkylene oxide) and a small effective inhibiting amount of a mixture comprising a mononuclear aromatic compound having at least one substituent nitro group and a precipitant anodic inhibitor.

2. A composition as claimed in claim 1 comprising water.

3. The composition of claim 2 comprising a buffer having a pH between 8 and 10.

4. The composition as claimed in claim 1, 2 or 3 wherein said precipitant anodic inhibitor is a member selected from the group consisting of anions of a fatty acid, bridged dimers of a hydroxyl-substituted aromatic carboxylic acid, non-oxidizing inorganic acids, benzoic acid, and boric acid.

5. The composition as claimed in claim 1 wherein said mononuclear aromatic compound is a nitro substituted aromatic acid.

6. The composition of claim 4 wherein said composition has incorporated therein the sodium salt of said nitro substituted aromatic acid.

7. The composition of claim 4—6 wherein said precipitant anodic inhibitor is a bridged dimer of a hydroxyl-substituted aromatic carboxylic acid having the general formula

1)

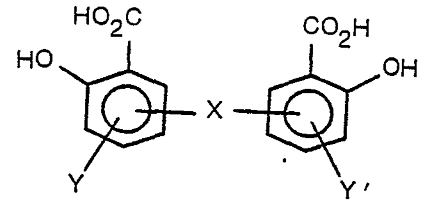

or

2)

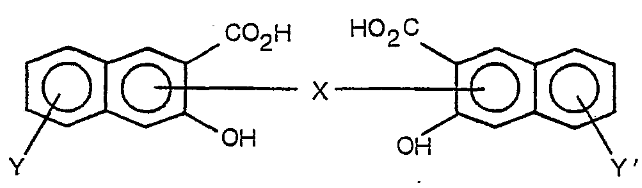

wherein X is a chemically stable group selected from lower alkylene, sulfonyl, and amino groups, and a sulfur atom, and Y and Y' may be the same or different and are a hdyrogen atom, hydroxyl group, amino group, or alkyl group.

8. The composition of claim 1—7 wherein said poly(alkylene oxide) is characterized by the presence of both oxyethylene groups and higher oxyalkylene groups.

9. The composition of claim 1 which contains from 0.1 percent to 50 percent by weight of poly(alkylene oxide).

10. The composition of claim 5 or 6 wherein said nitroaromatic compound is selected from the group consisting of nitrosubstituted aromatic acids and nitroaromatic salts or esters that in situ form an acid ion.

**Revendications**

1. Composition contenant un poly(oxyde d'alkylène) hydrosoluble et une petite quantité inhibitrice efficace d'un mélange comprenant un composé aromatique mononucléaire ayant au moins un groupe nitro substituant et un inhibiteur anodique précipitant.

2. Composition suivant la revendication 1, comprenant de l'eau.

3. Composition suivant la revendication 2, comprenant un tampon de pH compris entre 8 et 10.

4. Composition suivant la revendication 1, 2 ou 3, dans laquelle ledit inhibiteur anodique précipitant est un représentant du groupe comprenant des anions d'un acide gras, des dimères pontés d'un acide carboxylique aromatique à substituant hydroxyle, des acides inorganiques non oxydants, l'acide benzoïque et l'acide borique.

5. Composition suivant la revendication 1, dans laquelle ledit composé aromatique mononucléaire est un acide aromatique à substituant nitro.

6. Composition suivant la revendication 4, dans laquelle est incorporé le sel de sodium dudit acide aromatique à substituant nitro.

7. Composition suivant les revendications 4 à 6, dans laquelle l'inhibiteur anodique précipitant est un dimère ponté d'un acide carboxylique aromatique à substituant hydroxyle de formule générale

1)

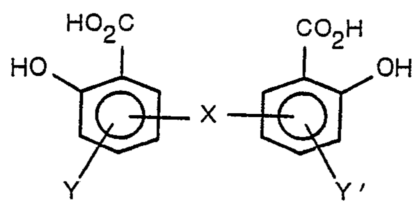

ou

2)

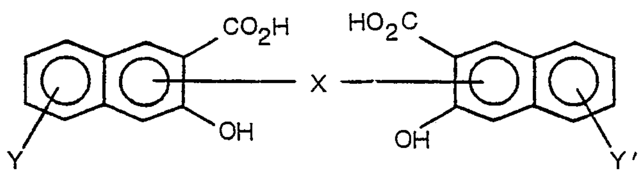

dans laquelle X est un groupe chimiquement stable choisi entre des groupes alkylène inférieurs, sulfonyle et amino, et un atome de soufre, et Y et Y' peuvent être égaux ou différents et représentent un atome d'hydrogène, un groupe hydroxyle, un groupe amino ou un groupe alkyle.

8. Composition suivant les revendications 1 à 7, dans laquelle ledit poly(oxyde d'alkylène) est caractérisé par la présence simultanée de groupes oxyéthylène et de groupes oxyalkylène supérieurs.

9. Composition suivant la revendication 1, qui contient 0,1 à 50% en poids de poly(oxyde d'alkylène).

10. Composition suivant la revendication 5 ou 6, dans laquelle ledit composé aromatique nitré est choisi dans le groupe comprenant des acides aromatiques à substituant nitro et des sels ou esters nitro aromatiques qui forment in situ un ion acide.

**Patentansprüche**

1. Zusammensetzung enthaltend ein wasserlösliches Polyalkylenoxid und eine geringe Menge eines Inhibitor-Gemischs aus einer einkernig-aromatischen Verbindung mit zumindest einer Nitrogruppe als Substituenten und einem ausfällenden Inhibitor für anodische Korrosion.

2. Zusammensetzung nach Anspruch 1, enthaltend Wasser.

3. Zusammensetzung nach Anspruch 2, enthaltend einen Puffer mit einem pH-Wert zwischen 8 und 10.

4. Zusammensetzung nach Anspruch 1, 2 oder 3, worin der Korrosionsinhibitor ein Anion einer Fettsäure, Brücken-Dimere einer hydroxysubstituierten aromatischen Carbonsäure, nicht-oxidierende anorganische Säuren, Benzoesäure und/oder Borsäure ist.

5. Zusammensetzung nach Anspruch 1, worin die einkernig-aromatische Verbindung eine nitro-substituierte aromatische Säure ist.

6. Zusammensetzung nach Anspruch 4, worin das Natriumsalz der nitro-substituierten aromatischen Säure enthalten ist.

7. Zusammensetzung nach Anspruch 4 bis 6, worin der Inhibitor ein Brücken-Dimer einer hydroxysubstituierten aromatischen Carbonsäure der allgemeinen Formel:

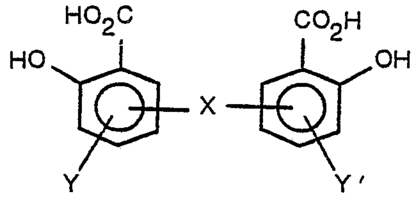

oder

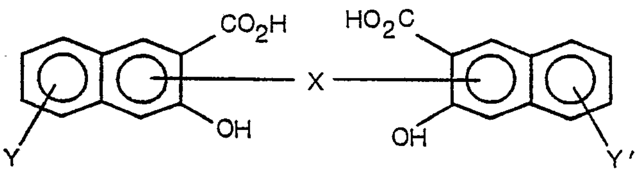

ist,

worin X eine chemisch stabile Gruppe in Form einer niederen Alkylen-, Sulfonyl- oder Aminogruppe und ein Schwefelatom sein kann und Y und Y' gleich oder unterschiedlich sind und zwar ein Wasserstoffatom, eine Hydroxyl-, Amino- oder Alkylgruppe.

8. Zusammensetzung nach Anspruch 1 bis 7, worin das Poly alkylenoxid charakterisiert ist durch die Anwesenheit von sowohl Oxyethylen als auch höheren Oxyalkylengruppen.

9. Zusammensetzung nach Anspruch 1, welche 0,1 bis 50 Gew.-% Polyalkylenoxid enthält.

10. Zusammensetzung nach Anpruch 5 oder 6, worin die nitro-aromatische Verbindung eine nitro-substituierte aromatische Säure, deren Salze oder Ester ist, die in situ ein Säureanion zu bilden vermögen.